# EUROPÄISCHE PATENTSCHRIFT

(11) **EP 4 402 040 B1**
(45) Veröffentlichungstag und Bekanntmachung des Hinweises auf die Patenterteilung: **21.01.2026**
(21) Anmeldenummer: 22785951.9
(22) Anmeldetag: 12.09.2022
(51) Int. Cl.: B62J 1/00, B62J 1/08

(54) **SATTEL FÜR EIN FAHRRAD, INSBESONDERE AUS CARBON**
SATTEL FÜR EIN FAHRRAD, INSBESONDERE AUS CARBON
SELLE POUR BICYCLETTE, NOTAMMENT EN CARBONE

(30) Priorität: 15.09.2021 DE 102021123855
(43) Veröffentlichungstag der Anmeldung: 24.07.2024
(73) Patentinhaber: MPR GmbH & Co. KG, 95615 Marktredwitz (DE)
(72) Erfinder: PÜRNER, Marcus, 95615 Marktredwitz (DE)
(74) Vertreter: Friderichs, Gunther
(86) Internationale Anmeldenummer: PCT/EP2022/075223
(87) Internationale Veröffentlichungsnummer: WO 2023/041464

(56) Entgegenhaltungen:
- EP-B1- 1 581 423
- WO-A1-2017/213315
- WO-A1-2020/016442
- WO-A1-2021/015979
- DE-B4- 102004 040 679
- DE-U1- 212012 000 284
- US-A1- 2018 290 703

## Beschreibung

### Gebiet der Erfindung

Die Erfindung betrifft einen ergonomisch gestalteten Sattel aus Carbon oder einem anderen Verbundwerkstoff für ein Fahrrad.

### Hintergrund der Erfindung

Sättel für Fahrräder sind aus verschiedenen Materialien verfügbar.

Als besonders hochwertiges, weil sehr leichtes Material, ist Carbon bekannt. Unter Carbon versteht man dabei ein Verbundmaterial aus Kohlestofffasern und Harz. In der Regel wird ein derartiger Sattel aus Carbonmatten von Hand gelegt, welche mit einem Harz getränkt ist (CFK). Im Autoklav wird sodann das Material unter Wärme und Druck verfestigt.

Die derartige Herstellung ist zwar aufwendig, ermöglicht aber eine große Formenvielfalt und ermöglicht es insbesondere, Sättel mit einem Gewicht von weniger als 80 g bereitzustellen. Nachteilig an den meisten auf dem Markt verfügbaren Carbonsätteln ist aber, dass diese aufgrund der hohen Steifigkeit des Materials oft gegenüber anderen Technologien, wie beispielsweise einer aufgespannten Lederschale, relativ unbequem sind. Insbesondere federn in der Regel allenfalls die Flügel der Sitzfläche beim Bewegen etwas ein.

Unter dem Handelsnamen Gelu F.1 ist dagegen aus der Praxis ein Carbonsattel bekannt, welcher eine integrierte Federung aufweist. Gemäß diesem vorbekannten Stand der Technik wird die Sitzfläche von einer gebogenen Blattfeder abgestützt, welche ihrerseits in die Streben zur Befestigung des Sattels an einer Klemme übergeht.

So kann ein verbesserter Komfort und dennoch ein Gewicht von weniger als 100 g erreicht werden.

Nachteilig an dieser Konstruktion ist aber, dass es im Bereich der Verbindung der gebogenen Blattfeder mit der Sitzfläche einen Bereich gibt, in welchem zwei Pakete aus Carbon übereinander liegen. Dies führt zu einer aufwendigeren Herstellung sowie zu einer Versteifung des Bereiches, in dem die Sitzfläche auf der Blattfeder sitzt. Dies schränkt die Gestaltungsfreiheit ein und führt des Weiteren dazu, dass aufgrund des steifen Mittelbereiches die Flügel der Sitzfläche weniger gut nach unten hin einfedern können.

Insbesondere das federnde Einfedern der Flügel beim Pedale-Treten ist aber auch wichtiger Ergonomieaspekt für einen Fahrradsattel.

Gattungsgemäße Fahrradsättel sind zudem aus den Dokumenten US 2018/2970703 A1, DE 10 2004 040679 B4 bekannt. Einen weiteren relevanten Fahrradsattel ist aus dem Dokument WO 2021/015979 A1 bekannt.

### Aufgabe der Erfindung

Der Erfindung liegt demgegenüber die Aufgabe zugrunde, die genannten Nachteile des Standes der Technik zumindest zu reduzieren.

### Zusammenfassung der Erfindung

Die Aufgabe der Erfindung wird bereits durch einen Sattel für ein Fahrrad nach Anspruch 1 gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft einen Sattel für ein Fahrrad. Unter einem Fahrrad im Sinne der Erfindung wird jegliches tretkurbelbetriebene Fahrzeug, also auch solches mit einem elektrischen Unterstützungsantrieb (E-Bike, Pedelec) verstanden.

Der Sattel dient dem Sitzen des Benutzers des Fahrzeugs. Der Sattel umfasst eine Sattelnase, welche über ein Übergangsbereich in eine Sitzfläche übergeht.

Es handelt sich also um einen Sattel mit klassischem Design, welcher nach vorne hin spitz zuläuft und bei welchem die Sitzfläche im Bereich der Sitzbeinhöcker des Benutzers angeordnet ist.

Weiter umfasst der Sattel Streben (Rails) zur Anbringung an einem Sattelstützenkopf. Der Sattel wird also mit den Streben bzw. Schienen an einem Sattelstützenkopf eingeklemmt. Die Streben erstrecken sich dabei parallel zur Fahrtrichtung.

Die Schienen können dabei sämtliche, aus dem Stand der Technik bekannten Geometrien aufweisen, insbesondere können die Schienen als Hochoval-Schienen ausgebildet sein. Sattelnase, Übergangsbereich, Sitzfläche und Streben sind aus Kunststoff, insbesondere aus einem Faserverbundwerkstoff, vorzugsweise aus Carbon, ausgebildet.

Wie eingangs beschrieben, wird unter Carbon ein Verbundmaterial verstanden, welches Carbonfasern umfasst (CFK). Insbesondere ist das Carbon aus Matten ausgebildet, welche mittels eines Harzes miteinander verbunden sind. Die hierfür verwendeten vorimprägnierten Matten werden auch als sogenannte Prepregs bezeichnet.

Zur Herstellung des Sattels werden die Carbonlagen zugeschnitten, in geeigneten Orientierungen, ggf. unter Zuhilfenahme einer Form, zu der Sattelform zusammengelegt und im Anschluss unter Druck und Wärme gehärtet. Dies kann insbesondere in einem Autoklav erfolgen.

Bei einer alternativen Ausführungsform kann der Sattel auch als Spitzgussteil aus Kunststoff ausgebildet sein. Insbesondere kann ein faserverstärkter Kunststoff verwendet werden. Bei einem derartigen Kunststoff umfasst das spritzbare Rohmaterial Fasern, die zusammen mit dem schmelzflüssigen Rohmaterial in die Form gespritzt werden. Es kann sich dabei insbesondere um ein glas- oder kohlefaserverstärktes Polyacrylamid oder Polyetheretherketon handeln.

Erfindungsgemäß sind mithin alle wesentlichen Bestandteile des Sattels aus einem Kunststoff, insbesondere aus dem Faserverbundwerkstoff Carbon, ausgebildet, insbesondere auch die Streben.

Gemäß einer Ausführungsform der Erfindung kann der Sattel aber auch mit einer Polsterung versehen sein. Es kann sich insbesondere um ein Schaumstoffpolster und/oder eine Bespannung des Sattels handeln.

Es kann sich bei der Polsterung insbesondere um eine additiv gefertigte Polsterung handeln, z.B. mittels eines 3D-Drucks.

Insbesondere kann die Polsterung als dreidimensionale Gitterstruktur ausgebildet sein.

Die Gitterstruktur kann eine Flächenstruktur abstützen, die als Sitzfläche dient. Die Flächenstruktur kann insbesondere plattenartig ausgebildet sein und folgt der ergonomischen Form des Sattels. Weiter kann die Flächenstruktur mit Öffnungen versehen sein.

Die die Polsterung, insbesondere die Gitterstruktur, kann eine mittige Aussparung überspannen.

Weiter können Teilbereich des Sattels, insbesondere der Sitzfläche, Teil eines Verbundmaterials sein, welches als Sandwichstruktur ausgebildet ist. Die Sandwichstruktur kann insbesondere Hohlkammern, z.B. Waben, umfassen und so als Leichtgewichtsstruktur ausgebildet sein.

Gemäß der Erfindung geht die Sattelnase und ein hinteres Ende der Sitzfläche über jeweils eine gebogene Blattfeder, insbesondere aus Carbon, zu den Streben über.

Im Unterschied zu dem eingangs beschriebenen Stand der Technik ist also insbesondere im Bereich der Sitzfläche nicht lediglich eine gebogene Blattfeder aus Carbon zwischen die Streben und die Sitzfläche eingesetzt, sondern die Sitzfläche selbst geht gemäß der Erfindung übergangslos in die Blattfeder über, welche sodann vorzugsweise übergangslos in die Streben übergeht.

Die Blattfeder durch diese Ausgestaltung bei bestimmungsgemäßem Gebrauch in Fahrrichtung ausgerichtet.

Es ist insbesondere vorgesehen, dass der Sattel keine Stufen oder Verbindungsstellen aufweist, bei denen jeweils zwei plattenförmige Bereiche aus Kunststoff miteinander verbunden sind.

Vielmehr ist vorzugsweise in jedem Bereich des Sattels zumeist eine Lage aus Fasern, insbesondere Carbonfasern, nicht unterbrochen.

Durch die erfindungsgemäße Ausgestaltung kann der Sattel formschöner und leichter gestaltet werden.

Des Weiteren kann die Sitzfläche, insbesondere, wenn diese aus zwei Flügeln ausgebildet ist, an den Rändern elastischer gestaltet werden.

Die gebogene Blattfeder ist vorzugsweise jeweils als ein Flächengebilde ausgebildet. Unter einem Flächengebilde wird eine plattenartige Anordnung verstanden, bei welcher die flächige Ausbreitung wesentlich größer als die Dicke des Flächengebildes ist. Insbesondere hat das Flächengebilde eine mindestens 10fach größere Fläche als Höhe.

Die gebogene Blattfeder verläuft vorzugsweise zumindest abschnittsweise senkrecht zur Fahrtrichtung im Wesentlichen geradlinig.

Die Blattfeder ist also als gebogene, insbesondere um etwa 180° gebogene Platte ausgebildet, welche senkrecht zur Fahrtrichtung aus im Wesentlichen gradlinigen Abschnitten ausgebildet ist.

Bei einer Weiterbildung der Erfindung umfasst der Sattel eine zentrale Aussparung, welche sich von der Sattelnase ausgehend bis zum Sitzbereich erstreckt.

Vorzugsweise ist der Sattel derart ausgebildet, dass sich zumindest eine zentrale Aussparung zumindest im Sitzbereich zwischen zwei Flügeln erstreckt, die so den Sitzbereich bilden.

Die beiden Flügel können an einem hinteren Ende des Sattels zusammenlaufen und so zu einem hinteren gebogenen Abschnitt übergehen, welcher Teil der Blattfeder ist.

So kann im Bereich der Sitzfläche auf eine Verbindungsstelle von Blattfeder und Sitzfläche verzichtet werden, was es ermöglicht, dass die Sitzfläche selbst Teil einer Feder ist und sich die Flügel, insbesondere bei Kräften am Rand, zur Seite hin umbiegen können.

Bei einer Ausführungsform der Erfindung umfasst die Sattelnase im vorderen Bereich eine mittige Einbuchtung. Von der Einbuchtung aus kann sich sodann eine Ausnehmung in Richtung hinterer Sitzfläche erstrecken.

Die Streben können vorn und/oder hinten jeweils in einen flächigen Abschnitt übergehen, wobei die so gebildeten Abschnitte der beiden Streben jeweils zu einem einzigen flächigen Abschnitt zusammenlaufen.

Es ist also insbesondere vorgesehen, dass die beiden Streben jeweils übergangslos zu einer einzigen gebogenen Blattfeder zusammenlaufen.

Auf der Oberseite des Sattels können dann wiederum die so gebildeten gebogenen Blattfederabschnitte auseinanderlaufen, so dass sich eine mittige Aussparung bildet.

Der Sattel ist so als Elliptikfeder ausgebildet, wobei die Elliptikfeder auf der oberen Seite des Sattels in zwei Hälften unterteilt ist. Durch diese Unterteilung in zwei Hälften ist auf der Oberseite ein Biegen der Flügel um eine Achse, welche im Wesentlichen in Fahrtrichtung ausgerichtet ist, möglich.

Auf der Unterseite ist der Sattel zwar durch die beiden beabstandeten Streben zweigeteilt. Diese werden aber durch die Klemmung zusammengehalten.

Die Gesamtquerschnittsfläche des Sattels schwankt vorzugsweise maximal um 70% um einen Mittelwert. Nicht eingerechet sind dabei die Streben, welche steifer ausgebildet sein können, da insbesondere im Bereich der Klemmung die Streben ohnehin nicht zur Federwirkung beitragen.

Der Sattel kann eine maximale Breite b von 150 bis 170 mm und/oder eine maximale Länge 1 von 250 bis 290 mm aufweisen.

Die zentrale Aussparung hat vorzugsweise eine maximale Breite b von 30 bis 40 mm.

Der Sattel hat vorzugsweise eine Gesamthöhe h_{g} von 50 bis 70 mm.

Bei einer bevorzugten Ausführungsform der Erfindung läuft die mittige Aussparung vor dem Ende der Sattelnase und/oder dem Ende der Sitzfläche aus.

Die Aussparung ist also in einem mittleren Bereich breiter und läuft dann aus, indem die Hälften zusammenlaufen.

Bei einer Weiterbildung der Erfindung läuft die Aussparung in der hinteren Hälfte der Sitzfläche auseinander und läuft am Ende der Sitzfläche wieder zusammen.

Die Aussparung verbreitert sich also nochmals in einem hinteren Bereich, in welchem die Sitzfläche endet.

Dies hat den Vorteil, dass der Sattel sodann im hinteren Bereich derart geteilt ist, dass die beiden geteilten gegenüberliegenden flächigen Bereiche der Blattfeder dennoch spürbar bei Torsion einfedern und so eine Bewegung der beiden Flügel ermöglichen.

Vorzugsweise hat die gebogene Blattfeder an der Spitze des Sattels eine Breite b_{S} von 25 bis 35 mm und/oder am Ende des Sattels eine Breite b_{E} von 35 bis 45 mm.

Der erfindungsgemäße Sattel kann ein Gewicht von weniger als 100 g, vorzugsweise von weniger als 90 g aufweisen. Insbesondere hat der Sattel ein Gewicht von 70 g bis 90 g.

Gemäß einem weiteren Aspekt betrifft die Erfindung einen Sattel nach einem oder mehreren der vorstehend beschriebenen Merkmale.

Der Sattel umfasst eine Sattelnase, die über einen Übergangsbereich in eine Sitzfläche übergeht sowie zwei Streben zur Anbringung an einen Sattelstützenkopf.

Sattelnase, Übergangsbereich, Sitzfläche und Streben sind, wie vorstehend beschrieben, aus Kunststoff, insbesondere einem Faserverbundwerkstoff, insbesondere aus Carbon, ausgebildet.

Gemäß diesem Aspekt ist die Offenbarung dadurch definiert, dass der Sattel als Elliptikfeder ausgebildet ist, wobei Sattelnase, Übergangsbereich und Sitzfläche ein Oberteil der Elliptikfeder und Streben und an die Streben angrenzende Flächenbereiche ein Unterteil der Elliptikfeder bilden.

In der Seitenansicht gesehen, ist der Sattel so quasi als vorzugsweise ununterbrochene Feder ausgebildet, die aus einer oberen und einer unteren Hälfte besteht.

Die beide Hälften der Elliptikfeder sind am vorderen und am hinteren Ende miteinander verbunden. Vorzugsweise über einen übergangslosen Übergang, in welchem es also keinen Bereich gibt, an dem nicht zumindest eine Lage Fasern, insbesondere Carbonfasern ununterbrochen ist.

Bei einer Weiterbildung der Erfindung ist in den Sitzflächen zumindest eine Lage aus einem elastischen Material angeordnet. Insbesondere kann zwischen den Carbonfaserlagen zumindest eine Lage aus einem elastischen Material, insbesondere aus einem Elastomer, angeordnet sein. Hierzu kann insbesondere ein unvernetzter Kautschuk verwendet werden, der zusammen mit den Carbon-Prepregs zu einer elastischen Schicht aushärtet.

Die Lage aus elastischem Material kann insbesondere in einer äußeren Hälfe der Flügel angeordnet sein. So kann im Bereich der Flügel ein randseitig weicherer Sattel bereitgestellt werden.

### Kurzbeschreibung der Zeichnungen

Der Gegenstand der Erfindung soll im Folgenden bezugnehmend auf die Zeichnungen Fig. 1 bis Fig. 12 näher erläutert werden.
Fig. 1 ist eine perspektivische Ansicht eines Ausführungsbeispiels eines erfindungsgemäßen Sattels.
Fig. 2 ist eine perspektivische Ansicht, in welcher die Unterseite dargestellt ist.
Fig. 3 ist eine Draufsicht auf den Sattel von oben.
Fig. 4 ist eine Schnittansicht entlang der Linie A-A gemäß Fig. 3.
Fig. 5 ist eine Draufsicht auf die Unterseite des Sattels.
Fig. 6 ist eine Seitenansicht.
Fig. 7 ist ein mittiger Längsschnitt des in den Zeichnungen Fig. 1 bis Fig. 6 dargestellten Sattels.
Fig. 8 zeigt, dem gegenübergestellt, einen Längsschnitt einer alternativen Ausführungsform eines erfindungsgemäßen Sattels.
Fig. 9 ist eine perspektivische Ansicht und Fig. 10 ist eine Querschnittsansicht einer weiteren Ausführungsform eines Sattels, bei dem sich die hintere gebogene Blattfeder erst im Bereich der Sitzfläche aufspaltet.
Fig. 11 - Fig. 12 zeigen einen Sattel, welcher mit einer Polsterung versehen ist, die mittels eines additiven Herstellungsverfahrens hergestellt wurde.

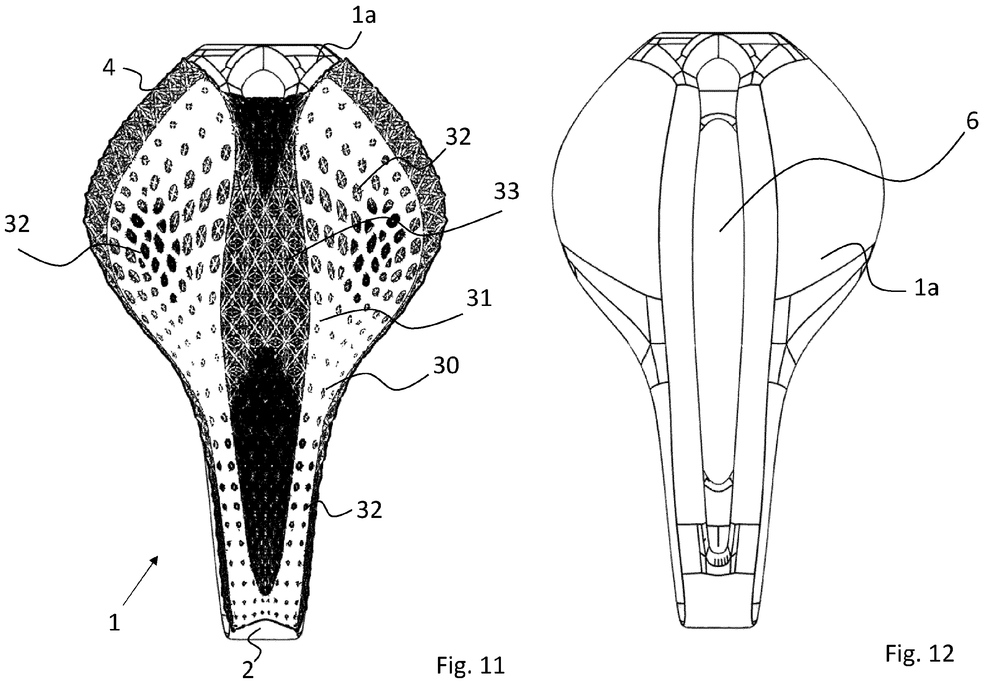

Fig. 11 ist eine Draufsicht auf den Sattel.
Fig. 12 zeigt die Sattelbasis des Sattels.

### Detaillierte Beschreibung der Zeichnungen

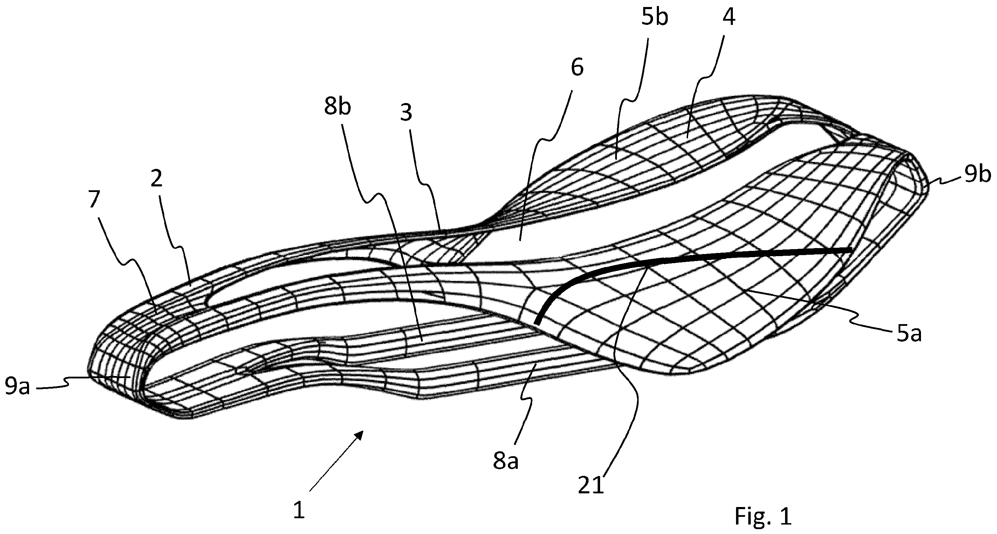

Fig. 1 zeigt in einer perspektivischen Ansicht ein Ausführungsbeispiel eines erfindungsgemäßen Sattels 1.

Der Sattel 1 ist monolithisch aus Carbon ausgebildet. In einem weiteren, hier nicht dargestellten Ausführungsbeispiel kann der Sattel 1 mit einer Bespannung und/oder Polsterung versehen sein.

Der Sattel 1 umfasst eine spitz zulaufende Nase 2, welche über einen Übergangsbereich 3 in die Sitzfläche 4 übergeht.

Die Sitzfläche 4 wird durch zwei mittig voneinander getrennte Flügel 5a, 5b gebildet.

In diesem Ausführungsbeispiel erstreckt sich ausgehend von der Sattelnase 2 eine zentrale Aussparung 6 bis nach hinten zum Ende des Sattels 1.

Am Anfang der Nase 2 ist der Sattel 1 noch nicht in zwei Hälften getrennt. Bei diesem Ausführungsbeispiel befindet sich hier eine Einbuchtung 7, nach deren Ende die Oberseite des Sattels in zwei Hälften auseinanderläuft.

Von der Form her ist die Oberseite des Sattels an den beiden Enden, nämlich am vorderen und am hinteren Ende, um etwa 180° gebogen, so dass sich jeweils eine gebogene Blattfeder 9a, 9b ausbildet.

Die gebogene Blattfeder 9a, 9b geht sodann in die Streben 8a, 8b über. Die Streben 8a, 8b dienen der klemmenden Befestigung des Sattels 1 am Kopf einer Sattelstütze und können insbesondere als Hochoval ausgebildet sein.

Aufgrund seiner Gesamtgestaltung hat der Sattel 1 die Gestalt einer ununterbrochenen Elliptikfeder, welche aufgrund der zentralen Aussparung auf der Oberseite 6 in zwei Hälften unterteilt ist.

Aufgrund der zentralen Aussparung 6 können die Flügel 5a, 5b bei Belastung auch entlang einer in Fahrtrichtung zeigenden Achse aufgrund von Torsion einfedern. Dies verbessert die Ergonomie des Sattels 1 bei den Bewegungen des Fahrers.

Die Flügel 5a, 5b können in einem äußeren Bereich eine Lage aus einem elastischen Material zwischen den Carbonfaserlagen umfassen. Dieser Bereich ist durch die Linie 21 gekennzeichnet und somit weicher. Die Grenze zwischen dem weicheren Bereich und dem sich anschließenden härteren Bereich ohne die Lage aus elastischem Material verläuft vorzugsweise bogenförmig von vorne nach hinten über die Sitzfläche.

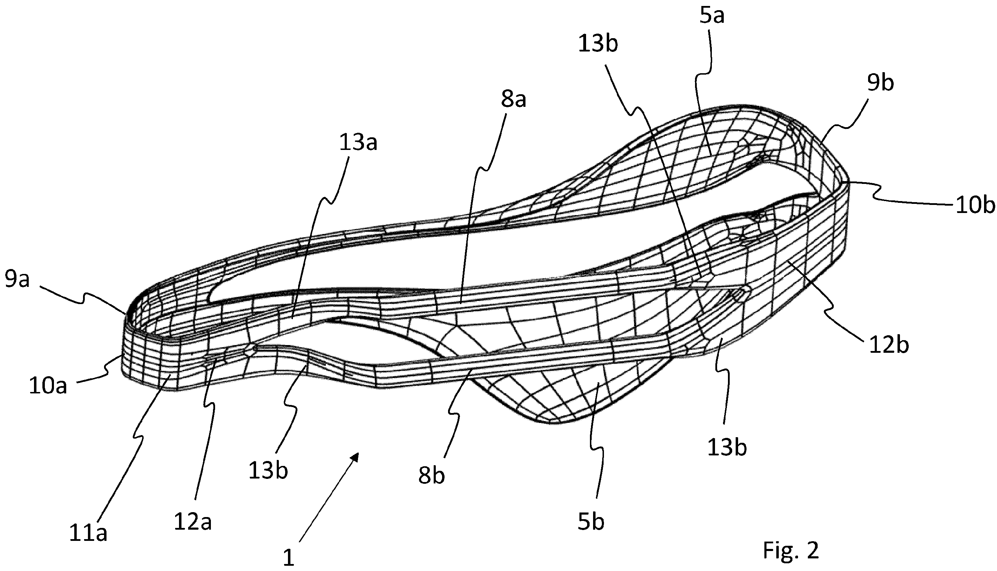

Fig. 2 ist eine weitere perspektivische Ansicht des Sattels 1, in welcher nunmehr insbesondere die Unterseite des Sattels dargestellt ist.

Bei dieser Ausführungsform der Erfindung hat die gebogene Blattfeder 9a an der Nase des Sattels 1 einen ersten Knick 10a sowie einen zweiten Knick 11a, von wo aus die Unterseite 12a zunächst im Wesentlichen horizontal verläuft und sich sodann in die beiden Hälften 13a und 13b aufspaltet, welche übergangslos in die Streben 8a, 8b übergehen.

Statt der Knicke (nicht dargestellt) kann auch eine völlig abgerundete, also U-förmige Ausgestaltung, gewählt werden.

Auf der Oberseite des Sattels laufen die Flügel 5a, 5b am hinteren Ende des Sattels wieder zusammen und bilden die hintere gebogene Blattfeder 9b.

Die hintere Blattfeder 9b läuft zunächst (bezogen auf die bestimmungsgemäße Anbringung) schräg nach hinten und wechselt am Knick 10b die Richtung, um sodann an der Unterseite 12b schräg nach unten zu verlaufen.

An der Unterseite 12b gabelt sich die hintere gebogene Blattfeder 9b ebenfalls auf und geht in die Streben 8a, 8b über.

Durch die Knicke 10a, 11a, 10b, insbesondere durch den Knick 10b, können gezielt Zonen mit bei Belastung höherer mechanischer Spannung bereitgestellt werden, wodurch in diesen Bereichen die Federwirkung verstärkt wird.

Gemäß einer anderen Ausführungsform der Erfindung (nicht dargestellt) kann aber auch auf den Knick 10b verzichtet werden, so dass auch am hinteren Ende der Sattel 1 in der Seitenansicht U- bzw. C-förmig ausgestaltet ist.

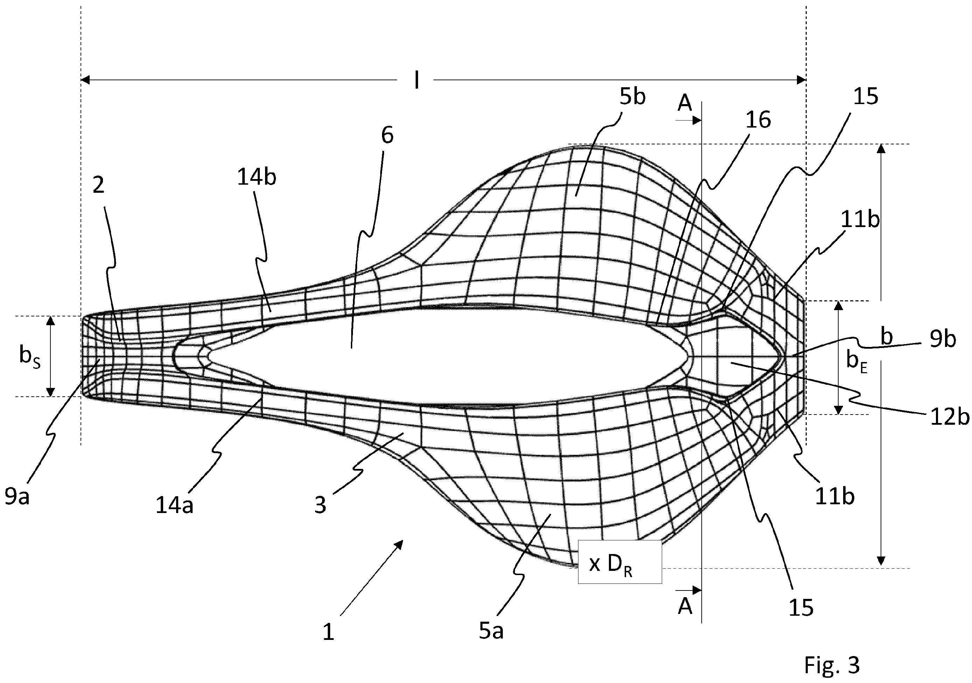

Fig. 3 ist eine Draufsicht auf die Oberseite des Sattels.

Der Sattel hat eine (maximale) Breite b, welche bei diesem Ausführungsbeispiel zwischen 130 und 170 mm liegt.

An der Spitze hat die gebogene Blattfeder 9a die Breite b_{S} von 25 bis 35 mm und am hinteren Ende hat die gebogene Blattfeder 9b die Breite b_{E} von 35 bis 45 mm.

Die mittige Aussparung 6, welche den Sattel 1 an der Oberseite in zwei Hälften unterteilt, ist derart breit, dass vom Übergangsbereich 3 ausgehend in Richtung Nase 2 Torsionsfedern 14a, 14b gebildet werden.

Hierdurch kann dem äußeren Rand des jeweiligen Flügels 5a, 5b bei Belastung senkrecht von oben eine Federkonstante D_{R} zugeordnet werden.

Die Federkonstante D_{R} beträgt vorzugsweise zwischen 1 und 1.000 N/mm, vorzugsweise zwischen 5 und 50 N/mm.

Vorzugsweise bleibt die Federkonstante bei einer senkrechten Belastung von oben bis zu einer Auslenkung von mindestens 3 mm in diesem Bereich.

Es versteht sich, dass die Federkonstante an der hier dargestellten Stelle am Rand in erster Linie durch eine Torsion der Flügel 5a, 5b bereitgestellt wird.

Daher verbreitert sich die zentrale Aussparung hinter den Flügeln 5a, 5b, also hinter dem Bereich, in dem die Sitzhöcker des Fahrers angeordnet sein, nochmals. Am Punkt 15 beträgt die Breite der Aussparung 6 vorzugsweise zumindest das 1,5fache der Breite der davorliegenden Einschnürung 16.

Trotz der flächigen Ausgestaltung können die dahinterliegenden Hälften 11b der hinteren gebogenen Blattfedern 9 auf Torsion belastet werden.

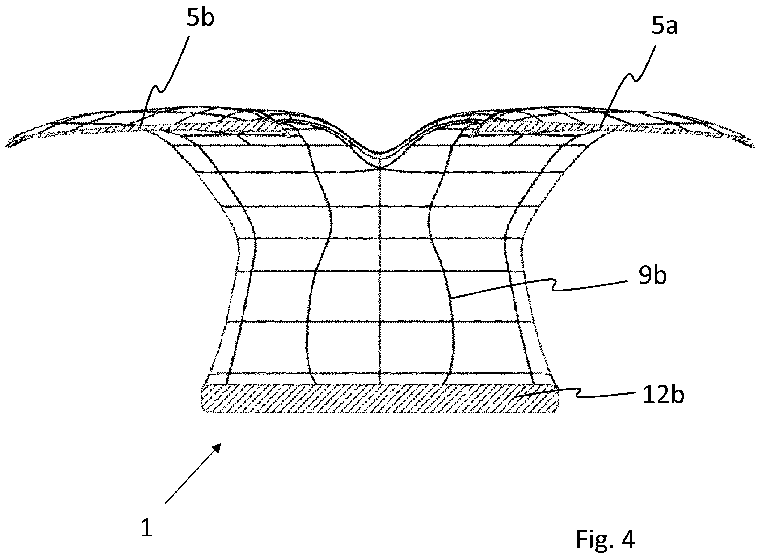

Fig. 4 ist eine Schnittansicht entlang der Linie A-A gemäß Fig. 3.

Zu erkennen ist, dass der Sattel 1 im Bereich der Flügel 5a, 5b dünner ausgebildet ist als im darunterliegenden Bereich der Unterseite 12b der gebogenen Blattfeder 9b.

So wird die größere Fläche auf der Oberseite kompensiert und alle Bereiche tragen gemeinsam zur Wirkung als Feder bei.

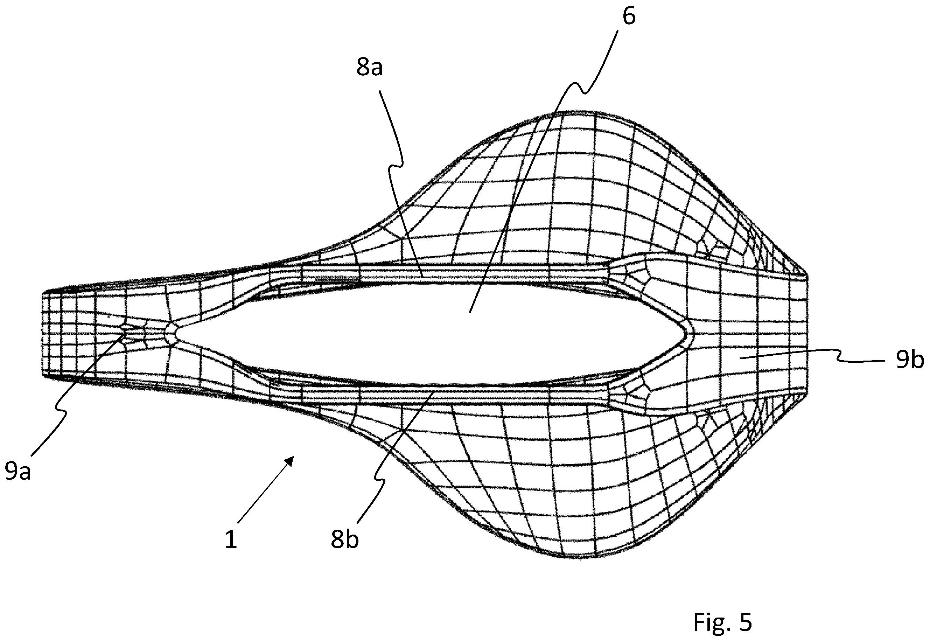

Fig. 5 ist eine Draufsicht auf die Unterseite des Sattels 1. Zu erkennen ist hier nochmals, dass die gebogenen Blattfedern 9a, 9b übergangslos, insbesondere monolithisch, in die Schienen 8a, 8b übergehen.

Der Abstand der Schienen 8a, 8b kann in etwa mit der Größe der zentralen Aussparung 6 korrespondieren.

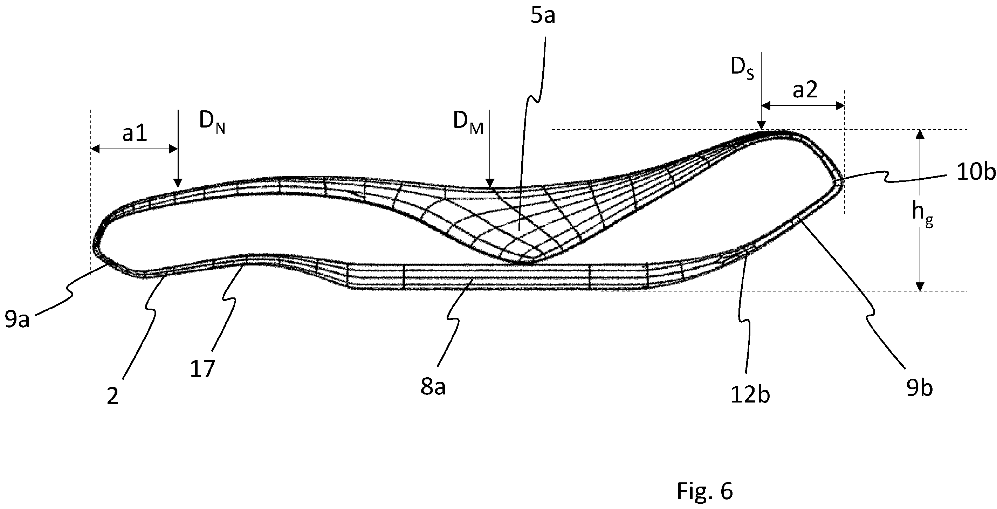

Fig. 6 ist eine Seitenansicht.

Die Federwirkung des geklemmten Sattels kann durch die drei Federkonstanten D_{N}, D_{M} und D_{S} charakterisiert werden.

An der um die Strecke von 20 mm von der Sattelspitze beabstandeten Stelle beträgt die Federkonstante D_{N} vorzugsweise zwischen 10 bis 1.000 N/mm.

An der um die Strecke a2 von 20 mm beabstandeten Stelle D_{S} beträgt die Federkonstante von 10 bis 5.000 N/mm.

Mittig hat der Sattel eine Federkonstante D_{M} von 10 bis 5.000 N/mm, wobei hierunter die Federkonstante bei Belastung in allein vertikaler Richtung verstanden wird.

Da in diesem Bereich die Satteloberseite zweigeteilt ist, kann die Federkontante D_{M} bestimmt werden, indem bei Messen keine Punktbelastung aufgebracht wird, sondern indem mittels einer senkrecht zur Fahrtrichtung ausgerichteten, horizontal angeordneter Stange das Einfedern an der markierten Stelle mittig gemessen wird.

Weiter ist in dieser Darstellung zu erkennen, dass auf der Unterseite im Bereich der Sattelnase 2 der Sattel über einen gebogenen Bereich 17 in die Schienen 8a, 8b übergeht. So wird die in den Schienen 8a, 8b vorhandene Spannung beim Einfedern reduziert.

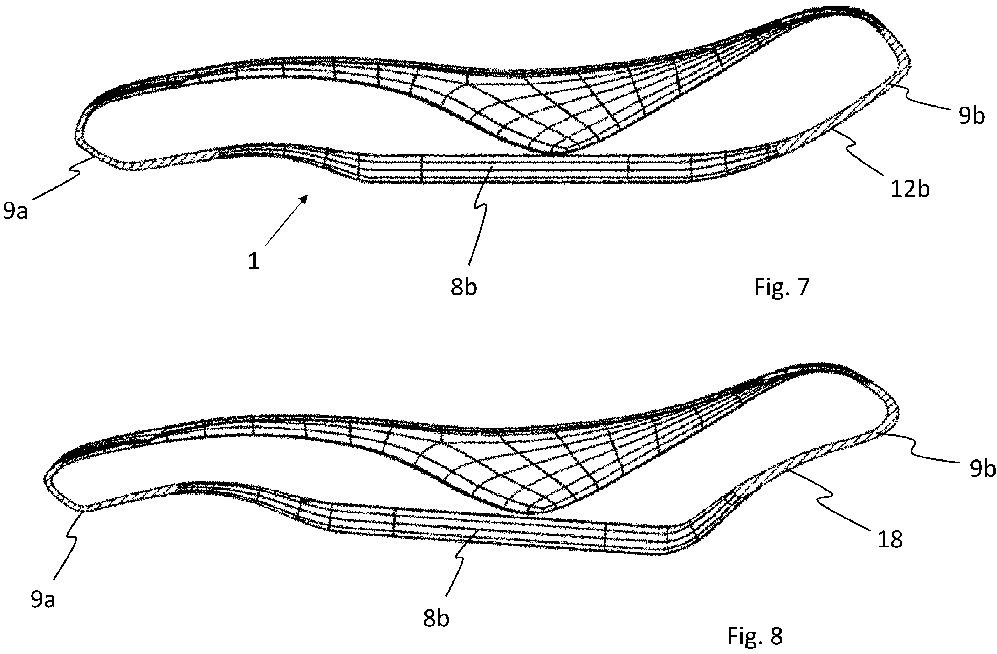

Fig. 7 ist ein mittiger Längsschnitt des Sattels 1.

Zu erkennen ist in der Schnittansicht, dass jeweils eine einzige ungeteilte gebogene Blattfeder 9a, 9b in den beiden Randbereichen liegt.

Die Blattfeder 9a und 9b spaltet sich sodann an der Unterseite 12b in die Streben 8b (und 8a) auf.

Auf der Oberseite spaltet sich die gebogene Blattfeder 9a, 9b in die Flügel auf.

Der in Fig. 7 dargestellte Sattel ist derart ausgestaltet, dass die Streben 8a, 8b im Wesentlichen entsprechend der Sitzfläche ausgerichtet sind.

Dementsprechend stehen die Streben 8a, 8b bei bestimmungsgemäßem Gebrauch in etwa waagerecht. Es versteht sich aber, dass die Neigung des Sattels ohnehin entsprechend der Präferenz des Fahrers über die Klemmung eingestellt werden kann.

Fig. 8 ist eine alternative Ausführungsform.

Bei dieser Ausführungsform verlaufen die Schrägen schräg zur Sitzfläche des Sattels. Insbesondere können die Streben 8a, 8b zur Horizontalen einen Winkel von 5 bis 20° einnehmen.

Im Unterschied zu dem Ausführungsbeispiel gemäß Fig. 7 umfasst auch die gebogene Blattfeder 9b einen gebogenen Bereich 18, welcher das Einfedern unterstützt.

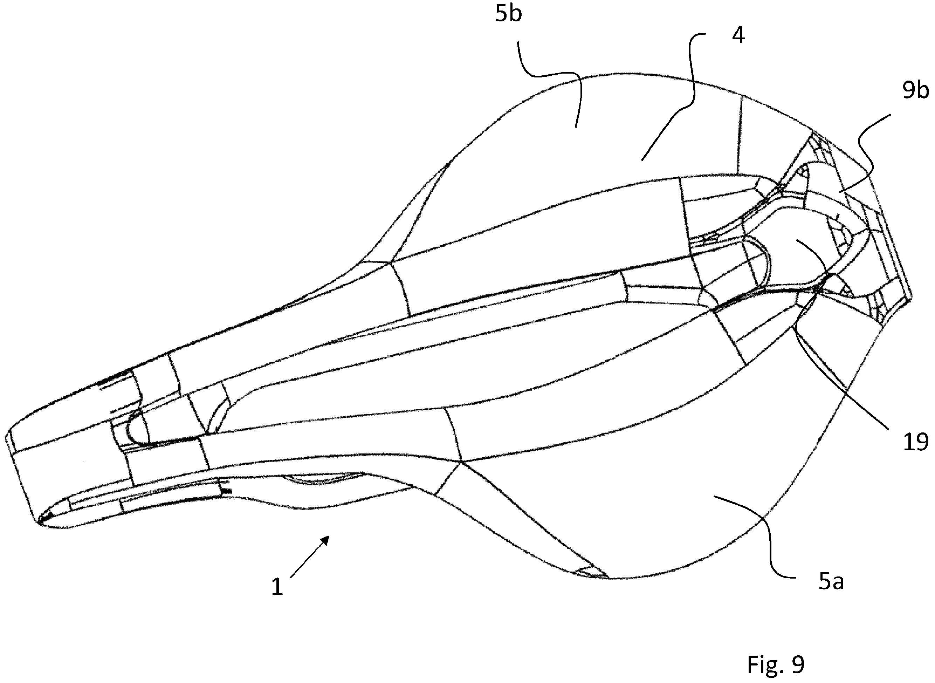

Fig. 9 ist eine perspektivische Ansicht eines Sattels 1 gemäß einer weiteren Ausführungsform. Im Unterschied zu den zuvor dargestellten Ausführungsformen spaltet sich hintere gebogene Blattfeder 9b erst im Bereich der Sitzfläche 4 in zwei in Längsrichtung geteilte Bereiche auf, welche die Flügel 5a und 5b bilden.

Im noch ungeteilten Bereich ist eine Einsenkung 19 vorhanden, welche als Entlastungszone für den Steiß des Fahrenden dient.

Die Flügel 5a, 5b federn gegenüber den zuvor dargestellten Ausführungsformen weniger stark ein, wenn diese seitlich auf Torsion belastet werden.

Ansonsten kann dieser Sattel genau wie anderen Ausführungsformen ausgebildet sein.

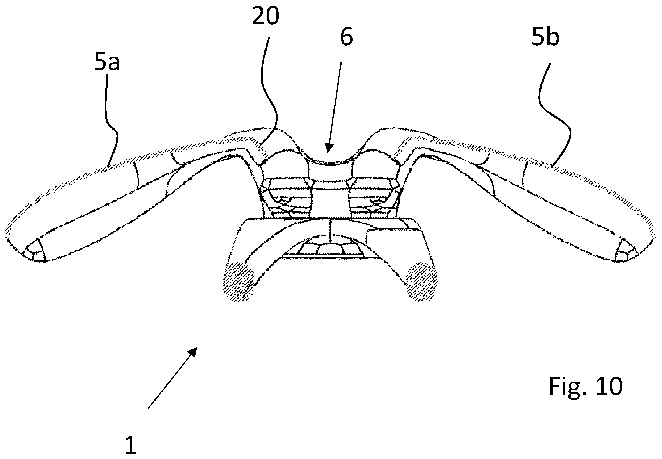

Wie in der Querschnittsansicht gemäß Fig. 10 dargestellt kann der Sattel (bei allen Ausführungsformen) mit einem Versteifungssteg 20 versehen sein.

Der Versteifungssteg 20 kann sich insbesondere um die zwischen den Flügeln 5a, 5b vorhandene zentrale Aussparung 6 herum erstrecken.

Bezugnehmend auf Fig. 11. - Fig. 12 soll anhand eines Ausführungsbeispiels einer Ausführungsform erläutert werden, bei welcher der Sattel 1 mit einer Polsterung 30 versehen ist.

Wie in Fig. 11 dargestellt, wird der Sattel 1 aus einer Sattelbasis 1a und einer Polsterung 30 gebildet.

Die Sattelbasis 1a umfasst, wie in Fig 12 dargestellt, eine zentrale Aussparung 6. Insbesondere kann die Sattelbasis 1a dem in den Zeichnungen Fig. 1 -10 dargestellten Ausführungsbeispielen eines Sattels entsprechen, wobei dieser zusätzlich mit der Polsterung 30 versehen ist, so dass der Sattel in den vorhergehenden Zeichnungen auch als Sattelbasis angesehen werden kann.

Wie in Fig. 11 dargestellt, erstreckt sich die Polsterung 30 beginnend mit der Sattelnase 2 bis in den hinteren Bereich der Sitzfläche 4.

Die Oberfläche der Polsterung 30 ist zumindest abschnittsweise als Flächenstruktur 31 ausgebildet. Die Oberfläche ist also im Bereich der Flächenstruktur 31 glatt und bildet eine Haut, wobei diese aber der ergonomischen Form des Sattels 1 folgt. Die Flächenstruktur 31 kann also als Haut ausgebildet sein, welche auf der der darunter liegenden Gitterstruktur 33 sitzt.

Die Flächenstruktur 31 erstreckt sich in diesem Ausführungsbeispiel über die Sitzfläche 4 und die Sattelnase, während in einem mittigen Bereich die Gitterstruktur 33 frei liegt.

In diesem Ausführungsformbeispiel ist die Flächenstruktur 31 mit Öffnungen 32 versehen. Über die Größe und die Anzahl der Öffnungen 32 kann die Steifigkeit des Polsters 30 mitbestimmt werden.

In diesem Ausführungsbeispiel ist im Bereich der Sattelnase 2 der Anteil der Öffnungen 32 größer als im Bereich der Sitzfläche 4.

Die Öffnungen 32 dienen neben der Beeinflussung der mechanischen Eigenschaften zugleich der besseren Belüftung des Sattels 1.

Die Polsterung 30 ist mittels eines additiven Verfahrens, beispielsweise mittels eines 3D-Drucks, hergestellt. Diese kann sodann mit der Sattelbasis verbunden werden, z.B. durch Kleben oder Schmelzen.

Bei einer andere Ausführungsform kann die Polsterung auch direkt auf die Sattelbasis 1a aufgedruckt werden.

Die Polsterung 30 umfasst eine Gitterstruktur 33. Bei einer derartigen Gitterstruktur sind Streben vorgesehen, welche in Form eines dreidimensionalen Gitters eine dreidimensionale, elastische Struktur bereitstellen.

Über die Art und Dichte der Struktur kann die Elastizität an jeder Stelle des Polsters 30 auf die ergonomischen Bedürfnisse optimiert eingestellt werden.

Durch die Erfindung konnte ein sehr leichter Carbonsattel bereitgestellt werden, dessen ergonomische Eigenschaften gegenüber bekannten Carbonsätteln wesentlich verbessert sind.

### Bezugszeichenliste

- 1: Sattel
- 1a: Sattelbasis
- 2: Nase
- 3: Übergangsbereich
- 4: Sitzfläche
- 5a, 5b: Flügel
- 6: Zentrale Aussparung
- 7: Einbuchtung
- 8a, 8b: Streben/Schienen
- 9a, 9b: gebogene Blattfeder
- 10a, 10b: Knick
- 11a: Knick
- 11b: Hälfte
- 12a: Unterseite
- 12b: Unterseite
- 13a, 13b: Hälfte
- 14a, 14b: Torsionsfeder
- 15: Punkt maximaler Breite der Aussparung auf der Sitzfläche
- 16: Einschnürung
- 17: gebogener Bereich
- 18: gebogener Bereich
- 19: Einbuchtung
- 20: Versteifungssteg
- 21: Linie
- 30: Polsterung
- 31: Flächenstruktur
- 32: Öffnung
- 33: Gitterstruktur

## Patentansprüche

1. Sattel (1) für ein Fahrrad, wobei der Sattel (1) eine Sattelnase (2) umfasst, die über einen Übergangsbereich (3) in eine Sitzfläche (4) übergeht, sowie zwei Streben (8a, 8b) zur Anbringung an einem Sattelstützenkopf aufweist, wobei Sattelnase (2), Übergangsbereich (3), Sitzfläche (4) und Streben (8a, 8b)aus Kunststoff, insbesondere aus Carbon, ausgebildet sind,
wobei die Sattelnase (2) und ein hinteres Ende der Sitzfläche (4) über jeweils eine gebogene Blattfeder (9a, 9b) zu den Streben (8a, 8b) übergehen,
**dadurch gekennzeichnet, dass** die gebogenen Blattfedern (9a, 9b) von den Streben (8a, 8b) ausgehend übergangslos in die Sitzfläche (4) bzw. die Sattelnase (2) übergehen.

2. Sattel (1) nach dem vorstehenden Anspruch, **dadurch gekennzeichnet, dass** die gebogene Blattfeder (9a, 9b) jeweils als Flächengebilde ausgebildet ist.

3. Sattel (1) nach einem der vorstehenden Ansprüche, **dadurch gekennzeichnet, dass** die gebogene Blattfeder (9a, 9b) zumindest abschnittsweise senkrecht zur Fahrtrichtung im Wesentlichen gradlinig verläuft.

4. Sattel (1) nach einem der vorstehenden Ansprüche, **dadurch gekennzeichnet, dass** der Sattel (1) eine zentrale Aussparung (6) aufweist, welche sich von der Sattelnase (2) ausgehend bis zum Sitzbereich (4) erstreckt.

5. Sattel (1) nach einem der vorstehenden Ansprüche, **dadurch gekennzeichnet, dass** die Sitzfläche (4) durch zwei mittig voneinander getrennte Flügel gebildet wird. CAD

6. Sattel (1) nach einem der vorstehenden Ansprüche, **dadurch gekennzeichnet, dass** die Sattelnase (2) in einem vorderen Bereich eine mittige Einbuchung (19) aufweist.

7. Sattel (1) nach einem der vorstehenden Ansprüche, **dadurch gekennzeichnet, dass** die Streben (8a, 8b) vorne und/oder hinten jeweils in einen flächigen Abschnitt übergehen, wobei die so gebildeten Abschnitte der beiden Streben (8a, 8b) zu einem einzigen flächigen Abschnitt zusammenlaufen.

8. Sattel (1) nach einem der vorstehenden Ansprüche, **dadurch gekennzeichnet, dass** der Sattel (1) mit einer Polsterung (30) überzogen ist,
und/oder dass die Gesamtquerschnittsfläche des Sattels (1) mit Ausnahme der Streben (8a, 8b) maximal 70 %, vorzugsweise maximal 40 % um einen Mittelwert schwankt und/oder das der Sattel (1) eine maximale Breite b vom 150 bis 170 mm und/oder eine maximale Länge 1 von 250 bis 290 mm hat,
und/oder dass die zentrale Aussparung (6) eine maximale Breite von 30 bis 40 mm hat,
und/oder dass der Sattel (1) eine Höhe h_{g} von 50 bis 70 mm hat.
und/oder dass die mittige Aussparung vor dem Ende der Sattelnase (2) und/oder dem Ende der Sitzfläche (4) ausläuft, indem die durch die Aussparung (6) gebildeten Hälften zusammenlaufen,
und/oder dass die zentrale Aussparung (6) in einer hinteren Hälfte der Sitzfläche (4) auseinanderläuft und am hinteren Ende der Sitzfläche (4) wieder zusammenläuft,
und/oder dass die gebogene Blattfeder (9a, 9b) an der Spitze des Sattels (1) eine Breite b_{S} von 25 bis 35 mm und/oder am Ende des Sattels (1) eine Breite b_{E} 35 bis 45 mm aufweist hat,
und/oder dass der Sattel (1) ein Gewicht zwischen 70 g und 90 g aufweist.

9. Sattel (1) nach einem der vorstehenden Ansprüche, **dadurch gekennzeichnet, dass** der Sattel (1) eine Polsterung (30) umfasst, welche mit einem additiven Fertigungsverfahren hergestellt ist.

10. Sattel (1) nach dem vorstehenden Anspruch, **dadurch gekennzeichnet, dass** die Polsterung (30) als dreidimensionale Gitterstruktur (33) ausgebildet ist.

11. Sattel (1) nach dem vorstehenden Anspruch, **dadurch gekennzeichnet, dass** die Gitterstruktur (33) eine Flächenstruktur (31) abstützt, insbesondere eine Flächenstruktur (31) mit Öffnungen.

12. Sattel (1) nach einem der drei vorstehenden Ansprüche, **dadurch gekennzeichnet dass** die Polsterung (30) eine mittige Aussparung überspannt.

13. Sattel (1) nach einem der vorstehenden Ansprüche, **dadurch gekennzeichnet, dass** in den Sitzflächen (4) zumindest eine Lage aus einem elastischen Material angeordnet ist.

## Claims

1. A saddle (1) for a bicycle, the saddle (1) comprising a saddle nose (2) that transitions into a seating surface (4) via a transition region (3), and comprising two rails (8a, 8b) for attachment to a saddle seatpost top; the saddle nose (2), transition region (3), seating surface (4) and rails (Sa, 8b) being made of plastics material, in particular carbon;
wherein the saddle nose (2) and a rear end of the seating surface (4) each transition to the rails (8a, 8b) via a curved leaf spring (9a, 9b);
**characterised in that** the curved leaf springs (9a, 9b) transition seamlessly from the rails (8a, 8b) into the seating surface (4) and the saddle nose (2), respectively.

2. The saddle (1) according to the preceding claim, **characterised in that** each of the curved leaf springs (9a, 9b) is in the form of a planar structure.

3. The saddle (1) according to any one of the preceding claims, **characterised in that** the curved leaf spring (9a, 9b) extends, at least in sections, substantially straight perpendicular to the direction of travel.

4. The saddle (1) according to any one of the preceding claims, **characterised in that** the saddle (1) has a central recess (6) which extends from the saddle nose (2) to the seating surface (4).

5. The saddle (1) according to any one of the preceding claims, **characterised in that** the seating surface (4) is defined by two wings centrally separated from each other.

6. The saddle (1) according to any one of the preceding claims, **characterised in that** the saddle nose (2) has, in its front portion, a central indentation (19).

7. The saddle (1) according to any one of the preceding claims, **characterised in that** the rails (8a, 8b) each transition into a planar section at their front and/or rear ends, the so defined sections of the two rails (8a, 8b) merging to form a single planar section.

8. The saddle (1) according to any one of the preceding claims, **characterised in that** the saddle (1) is covered with a padding (30);
and/or that the total cross-sectional area of the saddle (1) with the exception of the rails (8a, 8b) varies by not more than 70 %, preferably not more than 40 %, around a mean value;
and/or that the saddle (1) has a maximum width b of 150 to 170 mm and/or a maximum length 1 of 250 to 290 mm;
and/or that the central recess (6) has a maximum width of 30 to 40 mm;
and/or that the saddle (1) has a height h_{g} of 50 to 70 mm;
and/or that the central recess terminates before the end of the saddle nose (2) and/or the end of the seating surface (4) by that fact that the halves defined by the recess (6) are converging;
and/or that the central recess (6) diverges in a rear half of the seating surface (4) and converges again at the rear end of the seating surface (4);
and/or that the curved leaf spring (9a, 9b) has a width b_{S} of 25 to 35 mm at the tip of the saddle (1) and/or a width b_{E} of 35 to 45 mm at the end of the saddle (1);
and/or that the saddle (1) has a weight between 70 g and 90 g.

9. The saddle (1) according to any one of the preceding claims, **characterised in that** the saddle (1) comprises a padding (30) which is produced by an additive manufacturing process.

10. The saddle (1) according to the preceding claim, **characterised in that** the padding (30) is formed as a three-dimensional grid structure (33).

11. The saddle (1) according to the preceding claim, **characterised in that** the grid structure (33) supports a planar structure (31), in particular a planar structure (31) having openings.

12. The saddle (1) according to any one of the three preceding claims, **characterised in that** the padding (30) spans a central recess.

13. The saddle (1) according to any one of the preceding claims, **characterised in that** at least one layer of an elastic material is arranged in the seating surfaces (4).

## Revendications

1. Une selle (1) pour bicyclette, la selle (1) comprenant un bec de selle (2) qui se prolonge en une surface d'assise (4) via une zone de transition (3), et comprenant deux rails (8a, 8b) pour la fixation à une tête de tige de selle, le bec de selle (2), la zone de transition (3), la surface d'assise (4) et les rails (8a, 8b) étant réalisés en matériau plastique, notamment en carbone,
dans laquelle le bec de selle (2) et l'extrémité arrière de la surface d'assise (4) se prolongent chacun vers les rails (8a, 8b) via un ressort lamellaire courbé (9a, 9b);
**caractérisé en ce que** les ressorts lamellaire courbé (9a, 9b) se prolongent de manière continue depuis les rails (8a, 8b) vers la surface d'assise (4) et le bec de selle (2), respectivement.

2. La selle (1) selon la revendication précédente, **caractérisée en ce que** chacun des ressorts lamellaires courbés (9a, 9b) est sous la forme d'une structure plane.

3. La selle (1) selon l'une quelconque des revendications précédentes, **caractérisée en ce que** le ressort lamellaire courbé (9a, 9b) s'étend, au moins sur certaines portions, de manière essentiellement rectiligne dans une direction perpendiculaire à la direction de déplacement.

4. La selle (1) selon l'une quelconque des revendications précédentes, **caractérisée en ce que** la selle (1) présente une cavité centrale (6) qui s'étend du bec de selle (2) à la surface d'assise (4).

5. La selle (1) selon l'une quelconque des revendications précédentes, **caractérisée en ce que** la surface d'assise (4) est formée par deux ailes séparées l'une de l'autre au milieu.

6. La selle (1) selon l'une quelconque des revendications précédentes, **caractérisée en ce que** le bec de selle (2) présente, dans sa partie avant, une encoche centrale (19).

7. La selle (1) selon l'une quelconque des revendications précédentes, **caractérisée en ce que** les rails (8a, 8b) se prolongent chacun en une section plane à leurs extrémités avant et/ou arrière, les sections ainsi définies des deux rails (8a, 8b) se rejoignant pour former une seule section plane.

8. La selle (1) selon l'une quelconque des revendications précédentes, **caractérisée en ce que** la selle (1) est recouverte d'un rembourrage (30) ;
et/ou que la surface de section transversale totale de la selle (1), à l'exception des rails (8a, 8b), varie d'au plus 70 %, de préférence d'au plus 40 %, autour d'une valeur moyenne;
et/ou que la selle (1) présente une largeur maximale b de 150 à 170 mm et/ou une longueur maximale 1 de 250 à 290 mm;
et/ou que la cavité centrale (6) a une largeur maximale de 30 à 40 mm;
et/ou que la selle (1) présente une hauteur hg de 50 à 70 mm; et/ou que la cavité centrale se termine avant l'extrémité du bec de selle (2) et/ou l'extrémité de la surface d'assise (4), les moitiés définies par la cavité (6) se rejoignant;
et/ou que la cavité centrale (6) diverge dans la moitié arrière de la surface d'assise (4) et converge à nouveau à l'extrémité arrière de la surface d'assise (4);
et/ou que le ressort lamellaire courbé (9a, 9b) présente une largeur b_{S} de 25 à 35 mm à la pointe de la selle (1) et/ou une largeur b_{E} de 35 à 45 mm à l'extrémité de la selle (1); et/ou que la selle (1) présente un poids compris entre 70 g et 90 g.

9. La selle (1) selon l'une quelconque des revendications précédentes, **caractérisée en ce que** la selle (1) comprend un rembourrage (30) réalisé par un procédé de fabrication additive.

10. La selle (1) selon la revendication précédente, **caractérisée en ce que** le rembourrage (30) est conçu comme une structure de grille tridimensionnelle (33).

11. La selle (1) selon la revendication précédente, **caractérisée en ce que** la structure de grille (33) supporte une structure plane (31), en particulier une structure plane (31) présentant des ouvertures.

12. La selle (1) selon l'une quelconque des trois revendications précédentes, **caractérisée en ce que** le rembourrage (30) recouvre une cavité centrale.

13. La selle (1) selon l'une quelconque des revendications précédentes, **caractérisée en ce que** au moins une couche de matériau élastique est disposée dans les surfaces d'assise (4).
